# EUROPÄISCHE PATENTSCHRIFT

(11) **EP 1 378 317 B1**
(45) Veröffentlichungstag und Bekanntmachung des Hinweises auf die Patenterteilung: **06.07.2005**
(21) Anmeldenummer: 03008283.8
(22) Anmeldetag: 09.04.2003
(51) Int. Cl.: B23Q 3/00, B27B 27/08

(54) **Anschlagsystem für eine Werkzeugmaschine insbesondere für eine Tischkreissägemaschine**
Stop plate system for a machine tool, especially for a circular saw bench
Dispositif de butée pour une machine-outil, en particulier pour une scie circulaire à table

(30) Priorität: 02.07.2002 DE 20210275 U
(43) Veröffentlichungstag der Anmeldung: 07.01.2004
(73) Patentinhaber: Metabowerke GmbH, 72622 Nürtingen (DE)
(72) Erfinder: Geers, Hans, 49777 Klein Berssen (DE); Höschele, Volker, 72636 Frickenhausen (DE)
(74) Vertreter: Gesthuysen, von Rohr & Eggert

(56) Entgegenhaltungen:
- WO-A-91/00162
- DE-A- 10 000 102
- DE-U- 29 513 842
- US-A- 1 789 125

## Beschreibung

Die Erfindung betrifft ein Anschlagsystem für eine Werkzeugmaschine, insbesondere für eine Tischkreissägemaschine, mit den Merkmalen des Oberbegriffs von Anspruch 1.

Das bekannte Anschlagsystem für eine Werkzeugmaschine, von dem die Erfindung ausgeht (DE 86 15 156 U1) ist an einer Tischkreissägemaschine eingerichtet. Bei dieser Tischkreissägemaschine ist außen am Maschinengehäuse an der Bearbeitungsseite und der gegenüberliegenden Seite jeweils eine Trag- und Führungsschiene fest verschraubt, die genauso lang ist wie das Maschinengehäuse. Auf den Trag- und Führungsschienen läuft ein in gewünschten Positionen am Werkstücktisch feststellbarer Parallelanschlag (parallel zur Ebene des Sägeblattes). Der Parallelanschlag ist mittels einer Justiermechanik mit Schnellbetätigungshebel mit der an der Bearbeitungsseite angeordneten Trag- und Führungsschiene verspannt.

Die bekannte Werkzeugmaschine hat ferner in der Oberfläche des Werkstücktisches eine parallel zur Ebene des Sägeblattes und seitlich mit Abstand zur Ebene des Sägeblattes verlaufende Führungsnut für einen Winkelanschlag mit Anschlaglineal und Winkeleinsteller. Der Winkelanschlag kann beidseitig bis 45° oder 60° verstellt werden und wird an dem Werkstücktisch durch einfaches Einschieben in die Führungsnut, bei mehreren nebeneinander mit Abstand angeordneten Führungsnuten in eine der Führungsnuten, auf einfache Weise befestigt. Dazu wird konkret eine etwa T-formige Nutenleiste in die Führungsnut im Werkstücktisch eingeschoben. Sie kann darin in Längsrichtung der Führungsnut bei vorher gewählter und arretierter Winkeleinstellung des Anschlaglineals zum Vorschieben des Werkstücks in der gewünschten Winkelstellung gegenüber dem Sägeblatt in Längsrichtung verschoben werden.

Bei der zuvor erläuterten Werkzeugmaschine, dort ausgeführt als Tischkreissägemaschine, sind zwei Anschlagsysteme vorhanden und notwendig, nämlich das den Parallelanschlag umfassende Anschlagsystem und das davon separate, den Winkelanschlag umfassende Anschlagsystem.

Der Lehre liegt das Problem zugrunde, ein optimiertes, nämlich einfacheres Anschlagsystem für eine Werkzeugmaschine der in Rede stehenden Art, insbesondere also für eine Tischkreissägemaschine, anzugeben.

Gegenüber dem zuvor erläuterten, den Ausgangspunkt für die Lehre bildenden Anschlagsystem mit einer T-förmigen Nutenleiste in einer entsprechenden C-förmigen Führungsnut grenzt sich eine weitere Anschlagvorrichtung ab (DE 100 00 102 A1), bei der eine U-förmige Führungsnut vorhanden ist, in der eine seitlich glatte Nutenleiste sitzt, die mit einer nach dem Keilprinzip arbeitenden Klemmvorrichtung ausgerüstet ist. Auch hier gibt es ein schwenkbar gelagertes Anschlaglineal mit Winkeleinsteller. Die nach den Keilprinzip arbeitende Klemmvorrichtung dient als Längsarretierung, wobei auch bei arretiertem Anschlaglineal, jedoch einer gelösten Feststellschraube des Winkeleinstellers die Einstellkulisse geschwenkt werden kann.

Das weiter oben aurgezeigte Problem ist nun bei einem Anschlagsystem mit den Merkmalen des Oberbegriffs von Anspruch 1, also insbesondere mit C-förmiger Führungsnut und T-förmiger Nutenleiste, durch die Merkmale des kennzeichnenden Teils von Anspruch 1 gelöst.

Erfindungsgemäß ist das Anschlaglineal nicht nur mittels des Winkeleinstellers und der Feststellschraube in seiner Winkelstellung gegenüber der Nutenleiste einstellbar und feststellbar, sondern es ist auch in der Führungsnut in einer bestimmten Position durch Verspannen der Nutenleiste mit der Führungsnut in Längsrichtung arretierbar. Dadurch gewinnt das Anschlagsystem eine universelle Einsetzbarkeit sowohl als Winkelanschlag als auch, eingesetzt in bzw. mit einer etwa rechtwinklig dazu am Werkstücktisch ausgerichteten Führungsnut, als Parallelanschlag. Der Parallelanschlag soll in einer bestimmten Stellung fest arretiert sein, weil das Werkstück am Parallelanschlag entlang verschoben wird, um einen Schnitt mit einer genau vorgegebenen Schnittbreite zu realisieren. Das ist mit der zusätzlich vorgesehenen Längsarretierung des Anschlaglineals beim Anschlagsystem der Erfindung möglich.

Bevorzugte Ausgestaltungen und Weiterbildungen sind Gegenstand der Unteransprüche. Im folgenden wird die Erfindung anhand einer lediglich ein Ausführungsbeispiel darstellenden Zeichnung näher erläutert. In der Zeichnung zeigt
- Fig. 1: in perspektivischer Ansicht ein erfindungsgemäßes Anschlagsystem für eine Werkzeugmaschine, jedoch dargestellt ohne eine Werkzeugmaschine,
- Fig. 2: das Anschlagsystem aus Fig. 1 mit der Führungsschiene teilweise aufgeschnitten, so daß man die Nutenleiste in der Führungsnut erkennt,
- Fig. 3: in Draufsicht das Anschlagsystem aus Fig. 1 und
- Fig. 4: das Anschlagsystem aus Fig. 2 von links gesehen, im Bereich der Führungsschiene geschnitten.

Das in der Zeichnung dargestellte Anschlagsystem ist für eine Werkzeugmaschine bestimmt und geeignet. Werkzeugmaschinen dieser Art sind Maschinen zum Sägen, Hobeln, etc., insbesondere jedoch Tischkreissägemaschinen. Eine solche Werkzeugmaschine hat regelmäßig ein Maschinengehäuse oder ein Maschinengestell und jedenfalls einen Werkstücktisch, auf dem ein Werkstück aufliegt und der bei einer Tischkreissägemaschine von unten her in einem Sägeschlitz von einem Kreissägeblatt durchsetzt wird. Insoweit darf auf den Stand der Technik aus der eingangs bereits genannten DE 86 15 156 U1 ebenso verwiesen werden wie auf den Stand der Technik aus der DE 296 06 910 U1, aber auch der DE 40 25 440 A1.

Da es auf die weitere Konstruktion der Werkzeugmaschine nicht ankommt, sondern nur um das Anschlagsystem geht, ist in der Zeichnung nur das Anschlagsystem dargestellt.

Das Anschlagsystem weist zunächst eine C-förmige Führungsnut 1 und eine in der Führungsnut 1 mit Spiel geführte, in Längsrichtung verschiebbare, T-förmige Nutenleiste 2 auf. Die Nutenleiste 2 läuft in der Führungsnut 1 mit Spiel, so daß eine leichte Verschiebbarkeit in Längsrichtung gewährleistet ist. Allerdings muß das Spiel so gering sein, daß die Nutenleiste 2 in der Führungsnut 1 auch sauber geführt wird.

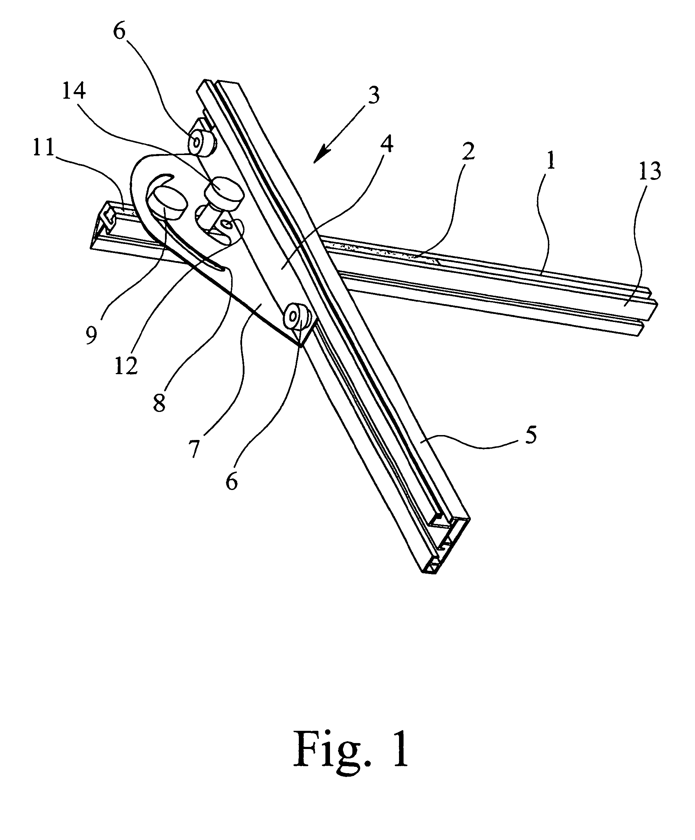

An der Nutenleiste 2 ist schwenkbar gelagert ein Anschlaglineal 3. Dieses Anschlaglineal 3, das an sich aus dem Stand der Technik, von dem die Erfindung ausgeht, bekannt ist, zeigt zunächst einen Träger 4. Am Träger 4 ist angebracht eine in Fig. 1 nach links und rechts gegenüber dem Träger 4 verschiebbare Anschlagschiene 5, an der das Werkstück zur Anlage gebracht werden kann. Die Befestigung der Anschlagschiene 5 am Träger 4 geschieht durch zwei Anschlagschrauben, deren zugeordnete, in Fig. 1 nicht erkennbar T-Gegenstücke in einer entsprechenden C-Nut der als Extrusionsprofil aus Metall, insbesondere aus Aluminium ausgeführten Anschlagschiene 5 laufen.

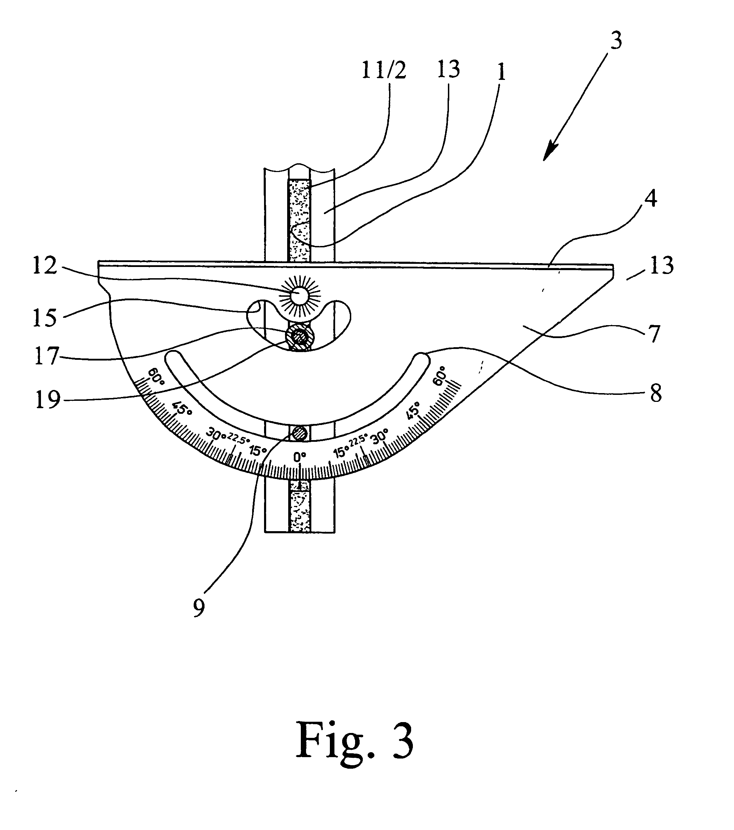

Das Anschlaglineal 3 weist, unmittelbar verbunden oder gar einstückig ausgeführt mit dem Träger 4, einen Winkeleinsteller 7 auf. Der Winkeleinsteller 7 hat eine Einstellkulisse 8 und eine Feststellschraube 9. Das dargestellte Ausführungsbeispiel zeigt die Einstellkulisse 8 als kreisbogenförmige Anordnung, die eine Winkelbegrenzung der Winkeleinstellung auf ± 60° (Fig. 3) gewährleistet. Es muß sich jedoch nicht um eine solche bogenförmige Gestaltung handeln, auch ein entsprechender Rand könnte eine Einstellkulisse 8 bilden. Wesentlich ist, daß mittels der Feststellschraube 9 der Winkeleinsteller 7 in der gewünschten Winkelstellung gegen die Nutenleiste 2 verspannbar ist.

Konstruktiv ist die Lösung so getroffen, daß die Feststellschraube 9 in eine Gewindefassung 10 in einem T-Mittelstück 11 der Nutenleiste 2 eingeschraubt ist. Der Winkeleinsteller 7 ist an der Nutenleiste 2 mittels einer Schwenklagerung 12 schwenkbar gelagert. Die Führungsnut 1 ist in einer Führungsschiene 13 ausgebildet und die Nutenleiste 2 weist in ihrem T-Mittelstück 11 eine Höhe auf, die größer ist als die Dicke der Führungsschiene 13 an der Führungsnut 1. Dadurch ragt die Nutenleiste 2 mit ihrem T-Mittelstück 11 nach oben über die Außenseite der Führungsschiene 13 hinaus. Diese Konstruktion gewährleistet, daß die Nutenleiste 2 in der Führungsnut 1 auch dann weiter längsverschiebbar ist, wenn der Winkeleinsteller 7 durch Anziehen der Feststellschraube 9 in einer bestimmten Winkelstellung mit der Nutenleiste 2 verspannt ist. Man kann also so die Winkelstellung des Anschlaglineals 3 fest einstellen und dann mittels des Anschlaglineals 3 das Werkstück, das gesägt werden soll, in der gewünschten Winkelstellung relativ zum Sägeblatt verschieben.

Die zuvor gegebene Erläuterung des Anschlagsystems gilt bereits für das aus dem Stand der Technik bekannte, den Ausgangspunkt für die Lehre bildende Anschlagsystem.

Am Anschlaglineal 3 ist eine zusätzliche Längsarretierung 14 vorgesehen ist, mit der das Anschlaglineal 3 unter Nutzung der Nutenleiste 2 an der Führungsschiene 13 gegen Längsverschiebungen arretierbar ist. Die Längsarretierung 14 ist unabhängig von der Winkeleinstellung. Durch die unabhängige Längsarretierung 14 wird erreicht, daß dann, wenn die Führungsnut 1 in einem Winkel von etwa 90° gegenüber der Nutzung des Anschlagsystems als Winkelanschlag ausgerichtet und das Anschlaglineal 3 mittels des Winkeleinstellers 7 in der Mittelstellung (0°) verspannt ist, das Anschlagsystem zur Realisierung eines Parallelanschlags genutzt werden kann.

Weiter besteht der Vorteil, daß auch bei mittels der Längsarretierung 14 an der Führungsschiene 13 arretiertem Anschlaglineal 3, jedoch gelöster Feststellschraube 9 die Einstellkulisse 8 schwenkbar ist. Insoweit kann man sogar noch eine zusätzliche Funktion als eine Art Winkelanschlag für sehr kleine vom Parallelanschlag abweichende Winkel gewinnen.

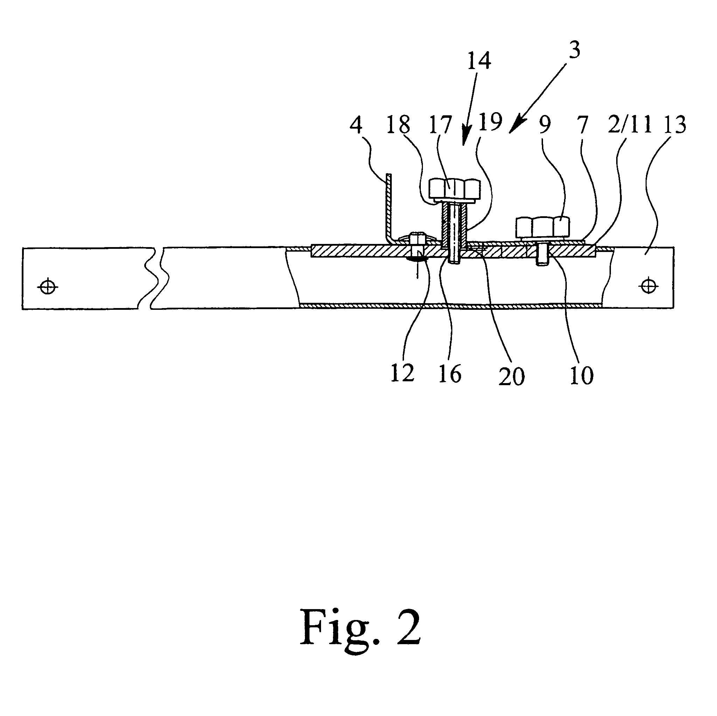

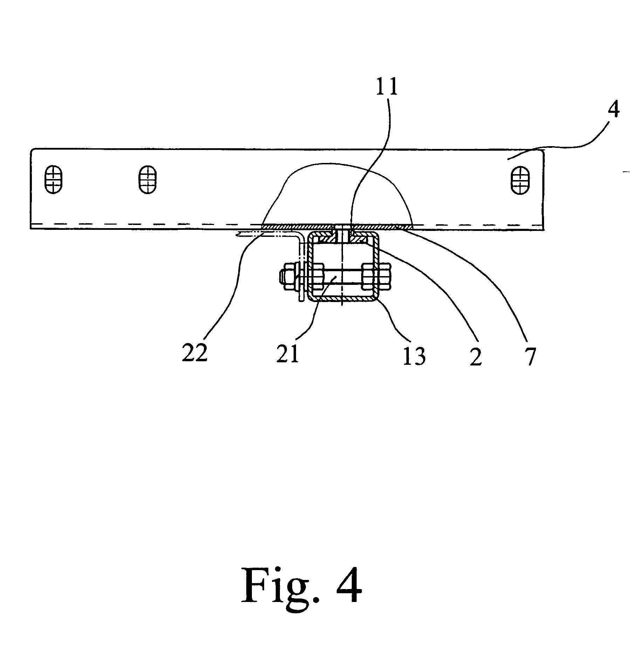

Das dargestellte und bevorzugte Ausführungsbeispiel zeigt eine Lösung, die dadurch gekennzeichnet ist, daß die Längsarretierung 14 in einem kreisbogenförmigen Freischnitt 15 der Einstellkulisse 8 an der Nutenleiste 2 angebracht ist. Das erkennt man in Fig. 3 besonders gut. Im Einzelnen zeigt Fig. 4 konstruktiv, daß hier in der dargestellten Ausführungsform die Längsarretierung 14 aus einer in eine Gewindefassung 16 der Nutenleiste 2 eingeschraubten Arretierschraube 17 mit einem Anschlag 18 und einer einen größeren Durchmesser als die lichte Breite der Führungsnut 1 aufweisenden Spannhülse 19, die auf der Führungsschiene 13 aufsitzt, besteht. Dabei ist vorgesehen, daß das T-Mittelstück 11 der Nutenleiste 2 um die Gewindefassung 16 herum eine Ausnehmung 20 aufweist, in der die Höhe des T-Mittelstücks 11 der Nutenleiste 2 geringer ist als die Dicke der Führungsschiene 13 an der Führungsnut 1. Dadurch gelingt die zuvor erläuterte Funktion der Verspannung mittels der Längsarretierung 14. Man erkennt diese Zusammenhänge, wenn man Fig. 2 und Fig. 3 gemeinsam betrachtet.

Das dargestellte Ausführungsbeispiel zeigt eine Konstruktion, bei der die Feststellschraube 9/Gewindefassung 10 für die Winkeleinstellung, die Schwenklagerung 12 und die Längsarretierung 14 drei voneinander separierte Teile der Gesamtkonstruktion bilden. Man könnte sich jedoch auch vorstellen, daß man die Schwenklagerung 12 mit der Längsarretierung 14 integriert, also die Längsarretierung 14 praktisch an den Platz der Schwenklagerung 12 in Fig. 2 und Fig. 3 der Zeichnung setzt. Auch dann müßte man eine entsprechende Ausnehmung 20 am T-Mittelstück 11 haben und natürlich müßte der Winkeleinsteller 7 eng um die Spannhülse 19 der Längsarretierung 14 herumsitzen, damit die Spannhülse 19 wirksam die Schwenkachse der Schwenklagerung 12 bilden kann.

Hinsichtlich der Ausgestaltung der Führungsschiene 13 bietet sich zunächst die Möglichkeit, diese Führungsschiene 13 wie im Stand der Technik integriert in dem Werkstücktisch der Werkzeugmaschine auszubilden. Das kann bis zur einteiligen Ausgestaltung gehen. Häufiger wird man allerdings eine solche Führungsschiene 13 dann im Werkstücktisch gewissermaßen einlassen so wie man auch die Sägeblattführung des Kreissägeblattes als separates Teil im Werkstücktisch einläßt.

Für die Nutzung der Funktionen des Anschlagsystems als Winkelanschlag und als Parallelanschlag benötigt man dann allerdings einander kreuzende Führungsschienen 13 in dem Werkstücktisch.

Aus dem Stand der Technik sind allerdings auch Werkstücktische mit randseitig anbringbaren, anschraubbaren oder ansteckbaren Führungsschienen bekannt. Insoweit zeigt das dargestellte und bevorzugte Ausführungsbeispiel eine separat an einem Werkstücktisch einer Werkzeugmaschine anbringbare Führungsschiene 13. Diese kann an der Längsseite der Werkzeugmaschine angebracht sein, wobei dann die Funktion des Winkelanschlags realisiert ist. Sie kann, bei entsprechender Ausgestaltung der Werkzeugmaschine, an der Querseite der Werkzeugmaschine angebracht sein, wodurch dann das Anschlagsystem den Parallelanschlag realisiert. Entsprechende Vorbereitungen bei Werkzeugmaschinen zur Anbringung eines solchen Anschlagsystems sind anzustreben.

Bevorzugt ist es, daß die Führungsschiene 13 als Aluminium-Strangpreßprofil ausgeführt ist. Fig. 4 zeigt eine andere Ausführungsform, die dadurch gekennzeichnet ist, daß die Führungsschiene 13 als abgekantetes Blechprofil ausgeführt ist. Fig. 4 zeigt dabei eine besondere Ausführungsform, die dadurch gekennzeichnet ist, daß die lichte Breite der Führungsschiene 13 mittels einer oder mehrerer quer angeordneter Querschrauben 21 einstellbar ist. Man kann so die Führungswirkung der Führungsnut 1 für das T-Mittelstück 11 der Nutenleiste 2 einjustieren.

Fig. 4 zeigt dabei in strichpunktierten Linien eine Winkelschiene 22, die zum Werkstücktisch der Werkzeugmaschine gehört. Man erkennt so wie die Führungsschiene 13 randseitig befestigt werden kann.

Gegenstand der Erfindung ist auch eine Werkzeugmaschine, insbesondere eine Kreissägemaschine, mit einem Anschlagsystem der zuvor beschriebenen Art. Diese zeichnet sich dadurch aus, daß Anbringungsmöglichkeiten für die Führungsschiene 13 an der Längsseite und der Querseite des Werkstücktisches oder des Gehäuses der Werkzeugmaschine vorgesehen sind.

## Patentansprüche

1. Anschlagsystem für eine Werkzeugmaschine, insbesondere für eine Tischkreissägemaschine, mit einer C-förmigen Führungsnut (1) und einer in der Führungsnut (1) mit Spiel geführten, in Längsrichtung der Führungsnut (1) verschiebbaren T-förmigen Nutenleiste (2), mit einem an der Nutenleiste (2) schwenkbar gelagerten Anschlaglineal (3) mit einem Winkeleinsteller (7), wobei der Winkeleinsteller (7) eine Einstellkulisse (8) und eine Feststellschraube (9) aufweist, mit der die Einstellkulisse (8) gegen die Nutenleiste (2) verspannbar ist, wobei die Führungsnut (1) in einer Führungsschiene (13) ausgebildet ist, wobei die Nutenleiste (2) in einem T-Mittelstück (11) eine Höhe aufweist, die größer ist als die Dicke der Führungsschiene (13) an der Führungsnut (1), und so mit ihrem T-Mittelstück (11) nach oben über die Außenseite der Führungsschiene (13) hinausragt und wobei die Einstellkulisse (8) nur gegen das T-Mittelstück (11) der Nutenleiste (2) verspannbar ist,
**dadurch gekennzeichnet,**
**daß** am Anschlaglineal (3) eine zusätzliche Längsarretierung (14) vorgesehen ist, mit der das Anschlaglineal (3) unter Nutzung der Nutenleiste (2) an der Führungsschiene (13) gegen Längsverschiebungen arretierbar ist und daß auch bei mittels der Längsarretierung (14) an der Führungsschiene (13) arretiertem Anschlaglineal (3), jedoch gelöster Feststellschraube (9), die Einstellkulisse (8) schwenkbar ist.

2. Anschlagsystem nach Anspruch 1, **dadurch gekennzeichnet, daß** die Längsarretierung (14) in einem kreisbogenförmigen Freischnitt (15) der Einstellkulisse (8) an der Nutenleiste (2) angebracht ist.

3. Anschlagsystem nach Anspruch 1, **dadurch gekennzeichnet daß** die Längsarretierung (14) gleichzeitig die Schwenklagerung (12) des Anschlaglineals (3) bildet.

4. Anschlagsystem nach einem der Ansprüche 1 bis 3, **dadurch gekennzeichnet daß** die Längsarretierung (14) aus einer in eine Gewindefassung (16) der Nutenleiste (2) eingeschraubten Arretierschraube (17) mit Anschlag (18) und einer einen größeren Durchmesser als die lichte Breite der Führungsnut (1) aufweisenden Spannhülse, die auf der Führungsschiene (13) aufsitzt, besteht und daß das T-Mittelstück (11) der Nutenleiste (2) um die Gewindefassung (16) herum eine Ausnehmung (20) aufweist, in der die Höhe des T-Mittelstücks (11) der Nutenleiste (2) geringer ist als die Dicke der Führungsschiene (13) an der Führungsnut (1).

5. Anschlagsystem nach einem der Ansprüche 1 bis 4, **dadurch gekennzeichnet daß** die Führungsschiene (13) in einem Werkstücktisch einer Werkzeugmaschine ausgebildet ist.

6. Anschlagsystem nach einem der Ansprüche 1 bis 4, **dadurch gekennzeichnet daß** die Führungsschiene (13) an einem Werkstücktisch einer Werkzeugmaschine separat anbringbar ist.

7. Anschlagsystem nach einem der Ansprüche 1 bis 6, **dadurch gekennzeichnet daß** die Führungsschiene (13) als Aluminium-Strangpreßprofil ausgebildet ist.

8. Anschlagsystem nach einem der Ansprüche 1 bis 6, **dadurch gekennzeichnet daß** die Führungsschiene (13) als abgekantetes Blechprofil ausgeführt ist.

9. Anschlagsystem nach Anspruch 7 oder 8, **dadurch gekennzeichnet daß** die lichte Breite der von der Führungsschiene (13) gebildeten Führungsnut (1) mittels einer oder mehrerer quer angeordneter Querschrauben (21) einstellbar ist.

10. Werkzeugmaschine, insbesondere Tischkreissägemaschine, mit einem Werkstücktisch und einem Anschlagsystem nach einem der Ansprüche 1 bis 9 oder vorbereitet für ein solches Anschlagsystem,
**dadurch gekennzeichnet,**
**daß** der Werkstücktisch der Werkzeugmaschine aufweist entweder
einander kreuzende Führungsnuten für die Nutenleiste des Anschlagsystems oder mindestens je eine Führungsnut für die Nutenleiste im Werkstücktisch und Anbringungsmöglichkeiten für eine Führungsschiene mit Führungsnut an einem quer dazu verlaufenden Rand des Werkstücktisches oder
Anbringungsmöglichkeiten für die Führungsschiene des Anschlagsystems sowohl am quer verlaufenden Rand als auch am längs verlaufenden Rand des Werkstücktisches.

## Claims

1. A limit stop system for a machine tool, particularly for a circular saw bench machine, comprising a C-shaped guide slot (1) and a T-shaped slot strip (2) which is guided with clearance in the guide slot (1) and is displaceable in the longitudinal direction of the guide slot (1), comprising a limit stop straight edge (3) which is swivel-mounted on the slot strip (2) and which has an angle adjuster (7), wherein the angle adjuster (7) comprises an adjusting gate (8) and a fixing screw (9) with which the adjusting gate (8) can be clamped against the slot strip (2), wherein the guide slot (1) is formed in a guide rail (13), wherein in a T-centre part (11) the guide slot strip (2) has a height which is greater than the thickness of the guide rail (13) at the guide slot (1), and its T-centre part (11) thus protrudes upwards above the outer face of the guide rail (13), and wherein the adjusting gate (8) can only be clamped against the T-centre part (11) of the slot strip (2),
**characterised in that**
an additional longitudinal locking device (14) is provided on the straight edge limit stop (3) with which the straight edge limit stop (3) can be locked to the guide rail (13), using the slot strip (2), against longitudinal displacements, and that the adjusting gate (8) can also be swivelled if the straight edge limit stop (3) is locked to the guide rail (13) by means of the longitudinal locking device (14) but the fixing screw (9) is loosened.

2. A limit stop system according to claim 1, **characterised in that** the longitudinal locking device (14) is mounted in a circularly arcuate free cut (15) of the adjusting gate (8) on the slot strip (2).

3. A limit stop system according to claim 1, **characterised in that** the longitudinal locking device (14) at the same time forms the swivel bearing (12) of the straight edge limit stop (3).

4. A limit stop system according to any one of claims 1 to 3, **characterised in that** the longitudinal locking device (14) consists of a locking screw (17) with a stop (18), which screw is screwed into a threaded holder (16) on the slot strip (2), and of a clamping sleeve which has a diameter larger than the clear width of the guide slot (1) and which is seated on the guide rail (13), and that around the threaded holder (16) the T-centre part (11) of the slot strip (2) has a recess (20) in which the height of the T-centre part (11) of the slot strip (2) is less than the thickness of the guide rail (13) at the guide slot (1).

5. A limit stop system according to any one of claims 1 to 4, **characterised in that** the guide rail (13) is formed in a workpiece table of a machine tool.

6. A limit stop system according to any one of claims 1 to 4, **characterised in that** the guide rail (13) can be mounted separately on a workpiece table of a machine tool.

7. A limit stop system according to any one of claims 1 to 6, **characterised in that** the guide rail (13) is formed as an extruded aluminium section.

8. A limit stop system according to any one of claims 1 to 6, **characterised in that** the guide rail (13) is formed as a folded sheet metal section.

9. A limit stop system according to claim 7 or 8, **characterised in that** the clear width of the guide slot (1) formed by the guide rail (13) can be adjusted by means of one or more transversely disposed transverse screws (21).

10. A machine tool, particularly a circular saw bench machine, comprising a workpiece table and a limit stop system according to any one of claims 1 to 9 or which is set up for such a limit stop system,
**characterised in that**
the workpiece table of the machine tool comprises either
guide slots, which cross each other, for the slot strip of the limit stop system, or at least one guide slot for each slot strip in the workpiece table, and mounting options for a guide rail with a guide slot at an edge, which extends transversely to said guide rail, of the workpiece table, or
mounting options for the guide rail of the limit stop system both at the transversely extending edge and at the longitudinally extending edge of the workpiece table.

## Revendications

1. Dispositif de butée pour une machine-outil, en particulier pour une scie circulaire à table, doté d'une rainure de guidage (1) en forme de C et d'une baguette de rainure (2) en forme de T, guidée dans la rainure de guidage (1) avec du jeu, mobile dans le sens longitudinal de la rainure de guidage (1), la baguette de rainure (2) portant une règle de butée (3) pivotante et munie d'un ajusteur angulaire (7) qui présente une coulisse de réglage (8) et une vis de blocage (9) permettant de bloquer la coulisse de réglage (8) par rapport à la baguette de rainure (2), la rainure de guidage (1) étant formée dans un rail de guidage (13), la baguette de rainure (2) présentant, dans une pièce médiane en T (11), une hauteur supérieure à l'épaisseur du rail de guidage (13) sur la rainure de guidage (1), et donc dépassant vers le haut, avec sa pièce médiane en T (11), à l'extérieur du rail de guidage (13), alors que la coulisse de réglage (8) ne peut être bloquée que par rapport à la pièce médiane en T (11) de la baguette de rainure (2),
**caractérisé en ce qu'**
un blocage longitudinal (14) supplémentaire prévu sur la règle de butée (3), permet de bloquer la règle de butée (3) longitudinalement en utilisant la baguette de rainure (2) sur le rail de guidage (13), et la coulisse de réglage (8) est pivotante, même lorsque la règle de butée (3) est bloquée au moyen du blocage longitudinal (14) sur le rail de guidage (13), mais avec la vis de fixation (9) desserrée.

2. Dispositif de butée selon la revendication 1,
**caractérisé en ce que**
le blocage longitudinal (14) s'applique sur la baguette de rainure (2) dans une découpe (15) en forme d'arc de cercle de la coulisse de réglage (8).

3. Dispositif de butée selon la revendication 1,
**caractérisé en ce que**
le blocage longitudinal (14) forme simultanément le palier pivotant (12) de la règle de butée (3).

4. Dispositif de butée selon l'une des revendications 1 à 3,
**caractérisé en ce que**
le blocage longitudinal (14) est constitué d'une vis de blocage (17) avec une butée (18), vissée dans une douille filetée (16) de la baguette de rainure (2), et d'une douille de serrage qui présente un diamètre supérieur à la largeur intérieure de la rainure de guidage (1) et qui est posée sur le rail de guidage (13), et la pièce médiane en T (11) de la baguette de rainure (2) présente, autour de la douille filetée (16), un évidement (20) dans lequel la hauteur de la pièce médiane en T (11) de la baguette de rainure (2) est inférieure à l'épaisseur du rail de guidage (13) sur la rainure de guidage (1).

5. Dispositif de butée selon l'une des revendications 1 à 4,
**caractérisé en ce que**
le rail de guidage (13) est formé dans une table porte-pièce d'une machine outil.

6. Dispositif de butée selon l'une des revendications 1 à 4,
**caractérisé en ce que**
le rail de guidage (13) peut être appliqué séparément sur une table porte-pièce d'une machine outil.

7. Dispositif de butée selon l'une des revendications 1 à 6,
**caractérisé en ce que**
le rail de guidage (13) est un profilé extrudé en aluminium.

8. Dispositif de butée selon l'une des revendications 1 à 6,
**caractérisé en ce que**
le rail de guidage (13) est un profilé de tôle replié.

9. Dispositif de butée selon la revendication 7 ou 8,
**caractérisé en ce que**
la largeur intérieure de la rainure de guidage (1) formée par le rail de guidage (13) peut être réglée par une ou plusieurs vis transversale(s) (21) placées transversalement.

10. Machine-outil, notamment scie circulaire à table, dotée d'une table porte-pièce et d'un dispositif de butée selon l'une des revendications 1 à 9, ou préparée pour un tel dispositif,
**caractérisée en ce que**
la table porte-pièce de la machine-outil présente soit des rainures de guidage s'entrecroisant pour la baguette de rainure du dispositif de butée, soit au moins une rainure de guidage par baguette de rainure dans la table porte-pièce et des possibilités d'appliquer un rail de guidage avec une rainure de guidage sur un bord transversal de la table porte-pièce, soit des possibilités d'appliquer le rail de guidage du dispositif de butée sur le bord de la table porte-pièce, aussi bien transversalement que longitudinalement.
